(19) Europäisches Patentamt
European Patent Office
Office européen des brevets

(11) Publication number: **0 338 529 B1**

(12) **EUROPEAN PATENT SPECIFICATION**

(45) Date of publication of patent specification: **29.03.95**

(51) Int. Cl.[6]: **C08G 65/00**, C10M 147/04, C10M 145/38

(21) Application number: **89107024.5**

(22) Date of filing: **19.04.89**

The file contains technical information submitted after the application was filed and not included in this specification

(54) **Fluorine-containing polyether and lubricant comprising the same.**

(30) Priority: **19.04.88 JP 97681/88**

(43) Date of publication of application: **25.10.89 Bulletin 89/43**

(45) Publication of the grant of the patent: **29.03.95 Bulletin 95/13**

(84) Designated Contracting States: **DE FR GB**

(56) References cited:
**EP-A- 0 293 864**
**DE-A- 2 656 423**
**US-A- 3 644 492**

**PATENT ABSTRACTS OF JAPAN vol. 11, no. 192 (C-429)(2639) 19 June 1987, JP-A-62 15295 (HITACHI LTD) 23 January 1987,**

**PATENT ABSTRACTS OF JAPAN vol. 12, no. 237 (C-509)(3084) 06 July 1988, & JP-A-63 27599 (HITACHI LTD) 05 February 1988,**

(73) Proprietor: **DAIKIN INDUSTRIES, LIMITED**
**Umeda Center Building,**
**4-12, Nakazaki-nishi 2-chome,**
**Kita-ku**
**Osaka-shi, Osaka-fu (JP)**

(72) Inventor: **Tohzuka, Takashi**
**1-5-9-401, Wakayamadai**
**Shimamoto-cho**
**Mishima-gun**
**Osaka-fu (JP)**
Inventor: **Yamamoto, Ikuo**
**4-11-11, Tezukayama-naka**
**Sumiyoshi-ku**
**Osaka-shi**
**Osaka-fu (JP)**
Inventor: **Misugi, Yoshihiko**
**10-6, Kurakuen 4-bancho**
**Nishinomiya-shi**
**Hyogo-ken (JP)**

(74) Representative: **Hansen, Bernd, Dr.rer.nat. et al**
**Hoffmann, Eitle & Partner**
**Patentanwälte**
**Postfach 81 04 20**
**D-81904 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

The present invention relates to a novel fluorine-containing polyether and a lubricant comprising the same fluorine-containing polyether.

A perfluoropolyether is a fluorine-containing oil which has non-flammability and good durability. However, perfluoropolyethers have a weak affinity to the surface of a material such as metal or glass. When it is thinly spread, for example, on a metal surface and used as a lubricant, durability is very poor because of migration. To solve this problem, a fluorine-containing polyether which has, at an end of the molecule, -COOH, $-CH_2OH$ or -COOR wherein R is $-CH_3$ or

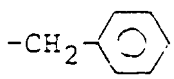 ,

has been developed. However, such fluorine-containing polyethers have defects in that those containing a carboxyl group must be carefully treated and properties such as lubricity or durability are insufficient.

JP-A-6215295 discloses fluorine-containing polyethers of this type which contain no fluorine in the terminal ester group.

An object of the present invention is to provide a fluorine-containing polyether which can be easily treated and has good properties such as lubricity and durability.

The invention is directed to a fluorine-containing polyether of the formula:

$R_f^1COOR_f^2$ (I)

or

$R_f^2OCO\text{-}R'^1_f\text{-}COOR_f^2$ (II)

therein the

$R_f^1$ and $R'^1_f$ groups contain a perfluoroalkyl polyether group having at least one repeating unit selected from a repeating unit of the formula:

$-C_3F_6O-$ (a)

a repeating unit of the formula:

$-C_2F_4O-$ (b)

and
a repeating unit of the formula:

$-CF_2O-$ (c)

provided that at least one of the repeating units (a) or (b) is contained and the total number of the repeating units (a), (b) and (c) is at least three and $R_f^2$ is a fluorine-containing alkyl group or a residue containing fluorine as well as an ether group.

The repeating unit: $-C_3F_6O-$ includes $-CF_2CF_2CF_2O-$ and $-CF(CF_3)CF_2O-$. The repeating unit: $-C_2F_4O-$ is usually $-CF_2CF_2O-$.

The $R_f^1$ group is, for example,

$F(CF_2CF_2CF_2O)_mCF_2CF_2-$

wherein m is 2 to 200.

The $R'^1_f$ group is, for example,

$-CF_2CF_2O(CF_2CF_2CF_2O)_n(CF_2)_4(OCF_2CF_2CF_2)_nOCF_2CF_2-$

wherein each of n is 2 to 200.

The $R_f^2$ group is, for example,

$C_aF_{2a+1}C_bH_{2b}-$ (A)

wherein a is an integer of 1 to 10 and b is 1 or 2,

$H(C_2F_4)_dCH_2-$ (B)

wherein d is an integer of 1 to 5,
or

$F(C_3F_6O)_l(C_2F_4O)_m(CF_2O)_nCF_2CH_2-$ (C)

wherein l, m and n are 0 or a positive integer provided that at least one of l and m is not 0 and l + m + n is not smaller than 3. In the fluorine-containing ether group (C), the order of each repeating unit may not be the same as described above and is arbitrary in the molecule.

Specific examples of the fluorine-containing polyethers according to the present invention are

$F(CF_2CF_2CF_2O)_pCF_2CF_2COOCH_2CF_2CF_3$ (1)

wherein p is 2 to 200, preferably 25 on the average,

$[HCF_2CF_2CH_2OCOCF_2CF_2O\text{-}(CF_2CF_2CF_2O)_m\text{-}CF_2CF_2]_2-$ (2)

wherein m is 2 to 200, preferably 20 on the average, and

$F(CF_2CF_2CF_2O)_qCF_2CF_2COOCH_2CF_2CF_2\text{-}(OCF_2CF_2CF_2)_rF$ (3)

wherein q is 2 to 200, preferably 20 on the average and r is 2 to 200, preferably 20 on the average.

The fluorine-containing polyether according to the present invention can be prepared by reacting

a fluorine-containing compound of the formula:

$R_f^1$-COOH,
$R_f^1$-COF,
or HOOC-$R'_f^1$-COOH

wherein $R_f^1$ and $R'_f^1$ are the same as described above, with a fluorine-containing alcohol of the formula:

$R_f^2$OH

wherein $R_f^2$ is the same as described above. A catalyst such as an acid (e.g. sulfuric acid) is preferably used in the reaction. The reaction is usually carried out at a temperature of 50 to 150 °C for 1 to 10 hours.

The fluorine-containing polyether according to the present invention can be used as a lubricant for materials such as a metal, a glass, a silica gel and graphite. It is particularly useful as the lubricant for a thin film magnetic tape or a thin film magnetic disc.

A solution of the lubricant is preferably prepared to apply the lubricant on the surfaces of various materials. Specific examples of the solvent are fluorine-containing solvents, for example, trichlorotrifluoroethane (e.g. Daiflon S-3 manufactured by Daikin Industries, Ltd.), $Cl(CF_2CFCl)_2Cl$ and $N(C_3F_7)_3$. The solvent may be used in an amount of 200 to 2000 parts by weight per part by weight of the lubricant.

Then, the solution of the lubricant is applied on a surface of a substrate such as a magnetic tape or a magnetic disc by dipping or spraying, and heated to form a lubricant film. The solvent is evaporated by heating. The heating may be usually carried out at a temperature of about 80 °C. The lubricant film may be formed to have a thickness of 0.002 to 0.01 µm.

The reason why the lubricant according to the present invention has good properties such as lubricity and durability is not clearly known. It is assumed that since the metal, glass, silica gel and graphite have many hydroxyl groups on their surfaces, the fluorine-containing polyether is adsorbed on their surfaces because of transesterification between the fluorine-containing polyether and a hydroxyl group. When the fluorine-containing polyether has sufficiently higher acidity than that of a hydroxyl group of the surface, the fluorine-containing alcohol moiety of the fluorine-containing polyether quickly transesterificates with the hydroxyl group of the surface. The transesterification is achieved in the heating process to evaporate the solvent. The transesterification is completed by the frictional heat during use.

The present invention is illustrated by following Examples.

Example 1

In a 200 ml three-neck flask, the fluorine-containing carboxylic acid:

$F(CF_2CF_2CF_2O)_pCF_2CF_2COOH$

wherein p is 25 on the average (200 g, 57 mmol) and then pentafluoropropanol (20 g, 130 mmol) were added and stirred. Then, concentrated sulfuric acid (0.5 ml) was added and the reaction was carried out at 90 °C for 5 hours while stirring. The completion of the reaction was confirmed by disappearance of the absorption peak at 1780 $cm^{-1}$ for the carboxylic acid and appearance of the absorption peak at 1820 $cm^{-1}$ for the ester linkage in IR analysis. After the completion of the reaction, the reaction product was washed with water (100 ml) and a lower phase was separated. Silica gel (30 g) was added to the lower phase to remove the unreacted carboxylic acid. The reaction product was filtrated through a filter having a pore diameter of 0.2 µm to obtain the fluorine-containing polyether:

$F(CF_2CF_2CF_2O)_pCF_2CF_2COOCH_2CF_2CF_3$

wherein p is 25 on the average. Yield: 300 g (78%).

The IR chart of the resultant fluorine-containing polyether is shown in the Figure.

Example 2

To the fluorine-containing carboxylic acid:

$F(CF_2CF_2CF_2O)_qCF_2CF_2COOH$

wherein q is 20 on the average (20 g), the fluorine-containing alcohol:

$F(CF_2CF_2CF_2O)_rCF_2CF_2CH_2OH$

wherein r is 15 on the average (15 g) was added and stirred. Then, concentrated sulfuric acid (2 ml) was added and the reaction was carried out at 150 °C for 10 hours while stirring. The completion of the reaction was confirmed by disappearance of the absorption peak at 1780 $cm^{-1}$ for the carboxylic acid and appearance of the absorption peak at 1820 $cm^{-1}$ for the ester linkage in IR analysis. After the completion of the reaction, the reaction product was washed with water (50 ml) three times and a lower phase was separated. Silica gel (100 g) was added to the lower phase to remove the unreacted

carboxylic acid. The reaction product was filtrated through a filter having a pore diameter of 0.2 $\mu$m to obtain the fluorine-containing polyether:

$F(CF_2CF_2CF_2O)_qCF_2CF_2COOCH_2CF_2CF_2$-$(OCF_2CF_2CF_2)_rF$

wherein q is 20 and r is 15 on the average. Yield: 24 g (64%).

Example 3

A two patch type hard disc having an uppermost carbon layer was dipped in a 0.1% by weight solution of the fluorine-containing polyether:

$F(CF_2CF_2CF_2O)_pCF_2CF_2COOCH_2CF_2CF_3$

wherein p is 25 on the average prepared in Example 1 in trichlorotrifluoroethane. The disc was removed from the solution and heated at 80°C for one hour in an oven. The resultant lubricant film had a thickness of 0.01 $\mu$m.

The durability of the hard disc was tested by using a CSS Tester. After 20,000 times, the $\mu$ value (friction coefficient) was not more than 0.5.

Comparative Example

A hard disc was treated in the same manner as in Example 3 but using the perfluoropolyether oil:

$F(CF_2CF_2CF_2O)_pCF_2CF_3$

wherein p is 25 on the average instead of the fluorine-containing polyether. The resultant lubricant film had a thickness of 0.01 $\mu$m. After 1,100 times, the $\mu$ value exceeded 0.5.

**Claims**

**1.** A fluorine-containing polyether of the formula:

$R_f^1COOR_f^2$ (I)

or

$R_f^2OCO\text{-}R'^1_f\text{-}COOR_f^2$ (II)

wherein the $R_f^1$ and $R'^1_f$ groups contains a perfluoroalkyl polyether group having at least one repeating unit selected from a repeating unit of the formula:

$-C_3F_6O-$ (a)

a repeating unit of the formula:

$-C_2F_4O-$ (b)

and
a repeating unit of the formula:

$-CF_2O-$ (c)

provided that at least one of the repeating units (a) or (b) is contained and the total number of the repeating units (a), (b) and (c) is at least three and $R_f^2$ is a fluorine-containing alkyl group or a residue containing fluorine as well as an ether group.

**2.** The fluorine-containing polyether according to claim 1, wherein the $R_f^2$ group is

$C_aF_{2a+1}C_bH_{2b}$- (A)

wherein a is an integer of 1 to 10 and b is 1 or 2,

$H(C_2F_4)_dCH_2$- (B)

wherein d is an integer of 1 to 5,
or

$F(C_3F_6O)_l(C_2F_4O)_m(CF_2O)_nCF_2CH_2$- (C)

wherein l, m and n are 0 or a positive integer provided that at least one of l and m is not 0 and l + m + n is not smaller than three.

**3.** The fluorine-containing polyether according to claim 1, wherein the $R_f^1$ group is

$F(CF_2CF_2CF_2O)_pCF_2CF_2$-

wherein p is an integer of 2 to 200, and the $R_f^2$ group is $-CH_2CF_2CF_3$.

**4.** The fluorine-containing polyether according to claim 1, wherein the the $R_f^1$ group is

$F(CF_2CF_2CF_2O)_qCF_2CF_2$-

wherein q is an integer of 2 to 200, and the $R_f^2$ group is

$-CH_2CF_2CF_2(OCF_2CF_2CF_2)_rF$

wherein r is an integer of 2 to 200.

**5.** A lubricant comprising the fluorine-containing polyether according to claim 1.

## Patentansprüche

**1.** Fluorhaltiger Polyether der Formel

$R_f^1COOR_f^2$ (I)

oder

$R_f^2OCO\text{-}R'_f{}^1\text{-}COOR_f^2$ (II)

worin die
$R_f^1$ - und $R'_f{}^1$-Gruppen eine Perfluoralkylpolyethergruppe mit wenigstens einer wiederkehrenden Einheit, ausgewählt aus wiederkehrenden Einheiten der Formel:

$-C_3F_6O-$ (a)

einer wiederkehrenden Einheit der Formel:

$-C_2F_4O-$ (b)

und einer wiederkehrenden Einheit der Formel:

$-CF_2O-$ (c)

enthalten unter der Voraussetzung, daß wenigstens eine der wiederkehrenden Einheiten (a) oder (b) enthalten ist, und die Gesamtzahl der wiederkehrenden Einheiten (a), (b) und (c) wenigstens Drei ist und $R_f^2$ eine fluorhaltige Alkylgruppe oder ein Rest, der Fluor sowie eine Ethergruppe enthält, ist.

**2.** Fluorhaltiger Polyether gemäß Anspruch 1, worin die $R_f^2$-Gruppe

$C_aF_{2a+1}C_bH_{2b}-$ (A)

ist, worin a eine ganze Zahl von 1 bis 10 und b 1 oder 2 ist,

$H(C_2F_4)_dCH_2-$ (B)

worin d eine ganze Zahl von 1 bis 5 ist,
oder

$F(C_3F_6O)_1(C_2F_4O)_m(CF_2O)_nCF_2CH_2-$ (C)

worin l, m und n 0 oder eine positive ganze Zahl sind, unter der Voraussetzung, daß wenigstens eines von l und m nicht 0 ist, und l + m + n nicht kleiner als Drei ist.

**3.** Fluorhaltiger Polyether gemäß Anspruch 1, worin die $R_f^1$- Gruppe ist

$F(CF_2CF_2CF_2O)_pCF_2CF_2-$

worin p eine ganze Zahl von 2 bis 200 ist, und die $R_f^2$-Gruppe $-CH_2CF_2CF3$ ist.

**4.** Fluorhaltiger Polyether gemäß Anspruch 1, worin die $R_f^1$-Gruppe

$F(CF_2CF_2CF_2O)_qCF_2CF_2-$

ist, worin q eine ganze Zahl von 2 bis 200 ist, und die $R_f^2$-Gruppe

$-CH_2CF_2CF_2(OCF_2CF_2CF_2)_rF$

ist, worin r eine ganze Zahl von 2 bis 200 ist.

**5.** Schmiermittel, umfassend den fluorhaltigen Polyether gemäß Anspruch 1.

## Revendications

**1.** Polyéther contenant du fluor de formule :

$R_f^1COOR_f^2$ (I)

ou

$R_f^2OCO\text{-}R'_f{}^1\text{-}COOR_f^2$ (II)

dans lesquelles les groupes $R_f^1$ et $R'_f{}^1$ contiennent un groupe polyéther perfluoroalkylé ayant au moins une unité choisie parmi une unité répétée de formule :

$-C_3F_6O-$ (a)

une unité répétée de formule :

$-C_2F_4O-$ (b)

et
une unité répétée de formule :

$-CF_2O-$ (c)

pourvu que au moins l'une des unités répétées (a) ou (b) soit présente et que le nombre total d'unités répétées (a), (b) et (c) soient au moins trois et $R_f^2$ est un groupe alkyle contenant du fluor ou un reste contenant du fluor ainsi qu'un groupe éther.

**2.** Polyéther contenant du fluor selon la revendication 1, dans lequel le groupe $R_f^2$ est

$C_aF_{2a+1}C_bH_{2b}-$ (A)

dans lequel a est un entier de 1 à 10 et b est

1 ou 2,

$H(C_2F_4)_dCH_2$- (B)

dans lequel d est un entier de 1 à 5, ou

$F(C_3F_6O)_l(C_2F_4O)_m(CF_2O)_nCF_2CH_2$- (C)

dans lequel, l, m et n sont 0 ou un nombre entier positif à condition que au moins l'un de l et de m ne soit pas 0 et l + m + n n'est pas inférieur à trois.

**3.** Polyéther contenant du fluor selon la revendication 1, dans lequel le groupe $R_f^1$ est

$F(CF_2CF_2CF_2O)_pCF_2CF_2$-

dans lequel p est un entier de 2 à 200, et $R_f^2$ est

$-CH_2CF_2CF_3$.

**4.** Polyéther contenant du fluor selon la revendication 1, dans lequel le groupe $R_f^1$ est

$F(CF_2CF_2CF_2O)_qCF_2CF_2$

dans lequel q est un entier de 2 à 200, et le groupe $R_f^2$ est

$-CH_2CF_2CF_2(OCF_2CF_2CF_2)_rF$

dans lequel r est un entier de 2 à 200.

**5.** Lubrifiant comprenant le polyéther contenant du fluor selon la revendication 1.

Figure

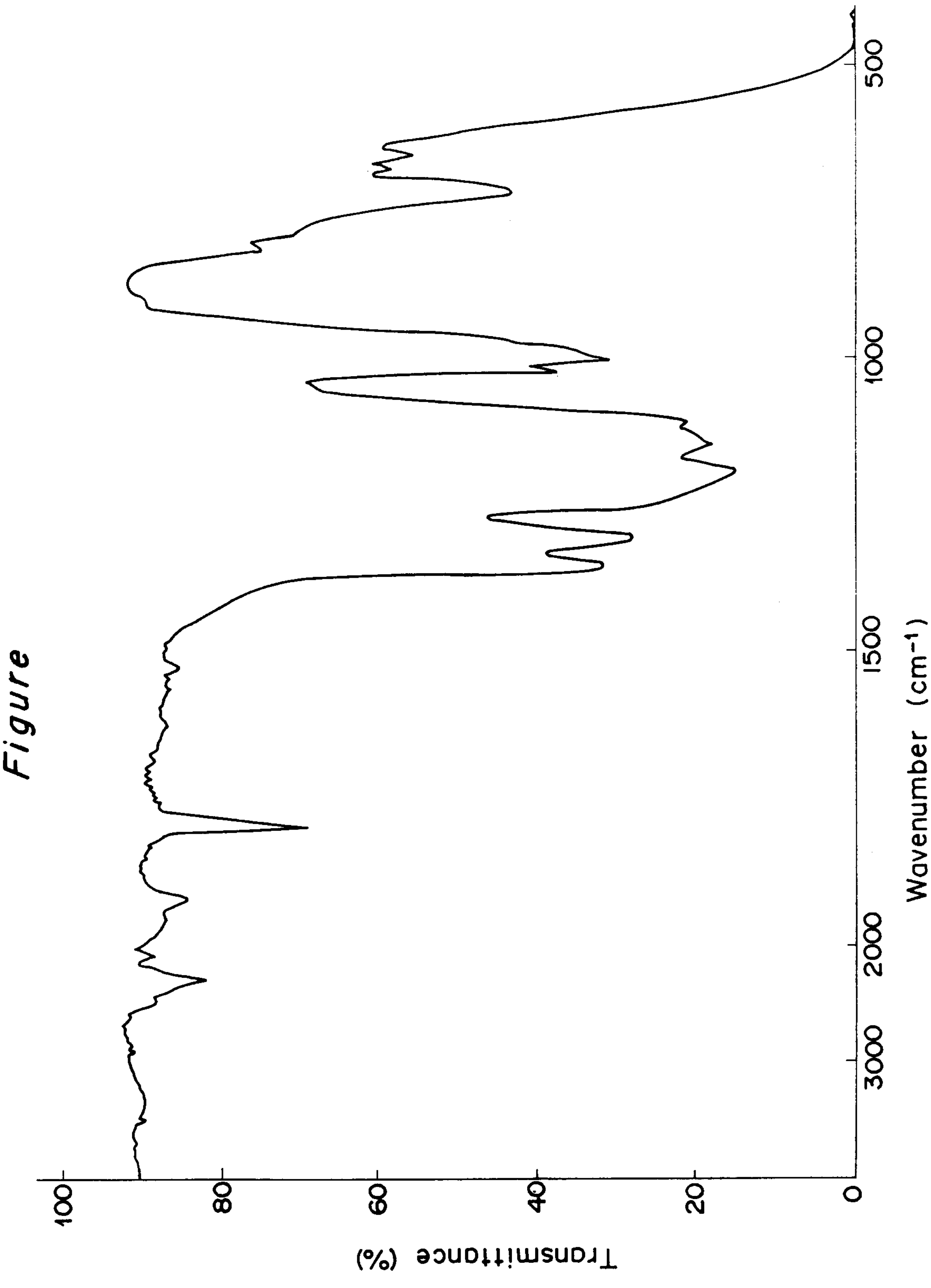

Transmittance (%)
0
20
40
60
80
100
Wavenumber (cm-1)
3000
2000
1500
1000
500